Europäisches Patentamt

European Patent Office

Office européen des brevets

(11) Numéro de publication : **0 041 438**
**B1**

(12) **FASCICULE DE BREVET EUROPÉEN**

(45) Date de publication du fascicule du brevet :
11.05.83

(51) Int. Cl.³ : **F 04 D 29/04, F 16 C 17/20**

(21) Numéro de dépôt : **81400828.0**

(22) Date de dépôt : **25.05.81**

(54) **Palier hydrodynamique auxiliaire dans un groupe motopompe.**

(30) Priorité : **02.06.80 FR 8012179**

(43) Date de publication de la demande :
**09.12.81 Bulletin 81/49**

(45) Mention de la délivrance du brevet :
**11.05.83 Bulletin 83/19**

(84) Etats contractants désignés :
**BE CH DE GB IT LI NL SE**

(56) Documents cités :
**DE A 2 716 433**
**DE C 461 270**
**US A 2 796 027**
**US A 3 165 365**

(73) Titulaire : **JEUMONT-SCHNEIDER Société anonyme dite:**
**31-32, Quai de Dion Bouton**
**F-92811 Puteaux Cedex (FR)**

(72) Inventeur : **Drevet, Michel**
**65, Boulevard des Belges**
**F-69008 Lyon (FR)**
Inventeur : **Trouillet, Jean**
**1, Place Desoil**
**B-6940 Fontaine-Valmont (BE)**

(74) Mandataire : **Lejet, Christian et al**
**31-32, Quai de Dion Bouton**
**F-92811 Puteaux Cedex (FR)**

Jouve, 18, rue St-Denis, 75001 Paris, France

Palier hydrodynamique auxiliaire dans un groupe motopompe

La présente invention concerne les groupes motopompes centrifuges pour fluide sous pression comprenant une roue à aubes solidaire d'un arbre vertical entraîné en rotation et disposée dans le corps de la pompe, la jante de la roue prenant normalement appui sur un palier hydrostatique, voir p. ex. US-A-2 796 027. Un dispositif de sécurité permet le fonctionnement d'une telle pompe dans des conditions anormales et accidentelles.

Généralement, l'arbre vertical d'un groupe motopompe est guidé au moyen de deux paliers hydrodynamiques disposés de part et d'autre du moteur d'entraînement de la pompe et d'un palier hydrostatique sur lequel la jante de la roue de la pompe prend appui. Cette pluralité de paliers de guidage est rendue nécessaire pour augmenter la vitesse critique de l'arbre, c'est-à-dire sa fréquence de résonance, par élimination de tout porte-à-faux résiduel.

Si le fonctionnement du palier hydrostatique qui est normalement alimenté par le fluide sous pression circulant dans la pompe, est perturbé, par exemple à la suite d'une dépressurisation intempestive du fluide entraînant notamment l'apparition d'un balourd en particulier en régime diphasique du fluide, l'alimentation en fluide du palier est défaillante ou inversée et il en résulte une instabilité pouvant entraîner un excentrement de l'arbre, ce qui accroît les risques de détérioration des pièces en mouvement relatif qui sont alors en contact. La présente invention a pour but d'obvier à ces inconvénients au moyen d'un palier hydrodynamique additionnel dont le fonctionnement n'est requis qu'en cas de défaillance du palier hydrostatique, c'est-à-dire lors d'un fonctionnement en conditions anormales.

Selon l'invention, ce palier est constitué par une douille logée coaxialement à l'arbre, dans un espace ménagé à cet effet entre cet arbre et le corps de la pompe, la douille ayant un diamètre intérieur légèrement supérieur au diamètre de l'arbre de manière à ne faire office de palier hydrodynamique qu'en cas d'excentrement de l'arbre de la pompe.

De préférence, une multiplicité de chambres est ménagée sur une partie de la surface interne de cette douille de manière à former un labyrinthe permettant de limiter le débit de la fuite du fluide autour de l'arbre.

L'invention sera mieux comprise et d'autres buts, avantages et caractéristiques de celle-ci apparaîtront plus clairement à la lecture de la description qui suit d'un mode préféré de réalisation, description à laquelle une planche de dessin est annexée.

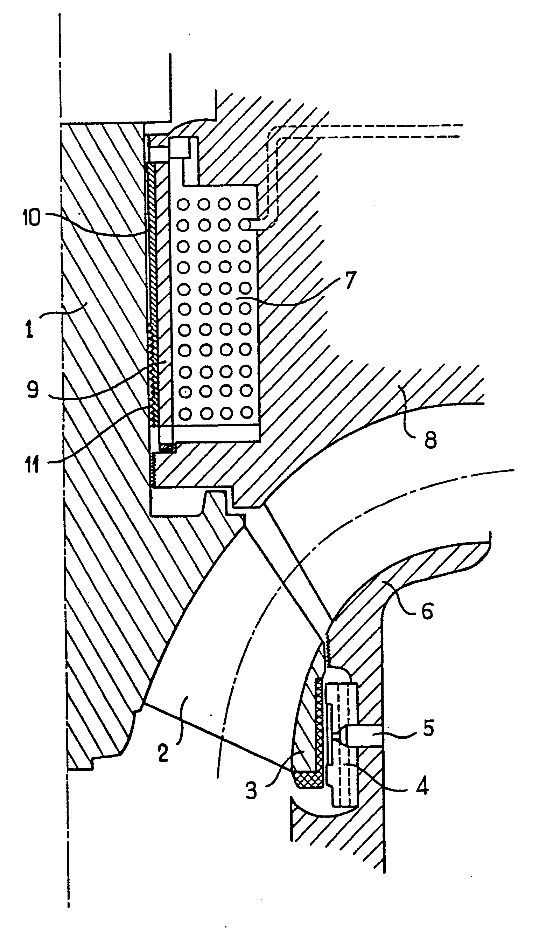

La figure unique represente, en demi-coupe axiale partielle, une pompe pourvue d'un palier hydrodynamique additionnel conformément à l'invention.

En référence maintenant à la figure unique sur laquelle le moteur d'entraînement de l'arbre 1 de la pompe n'a pas été représenté, une roue à aubes 2 est solidaire de l'arbre 1. La jante 3 de cette roue prend appui sur un palier hydrostatique 4 alimenté par le fluide pompé au moyen d'un gicleur 5 et solidaire du diffuseur 6 de la pompe.

Pour certaines applications d'une telle pompe, une partie du fluide pompé est dirigée vers un dispositif de réfrigération 7 disposé dans le corps 8 de la pompe de manière à assurer l'alimentation en fluide d'un joint à fuite contrôlée non représenté sur la figure. Dans ce cas, la paroi 9 du corps 8 de la pompe constitue une barrière thermique.

Selon l'invention présente, une douille 10 est logée coaxialement à l'arbre 1, dans un espace ménagé à cet effet entre cet arbre 1 et le corps de la pompe ou, plus précisément, entre cet arbre 1 et la paroi 9 du corps 8 de la pompe.

Cette douille 10 est prévue pour faire office de palier hydrodynamique en cas de défaillance du palier hydrostatique 4. De ce fait, le diamètre interne de la douille 10 qui est très légèrement supérieur au diamètre de l'arbre 1 est tel que la jante 3 de la roue ne puisse entrer en contact avec le coussinet du palier 4.

Il en résulte, qu'en fonctionnement normal de la pompe, le palier constitué par la douille 10 n'est pas utilisé de manière à ne pas modifier sensiblement les caractéristiques dynamiques de l'arbre 1 et à ne pas engendrer d'usure des pièces.

Cependant, en fonctionnement anormal, par exemple dû à une dépressurisation du fluide, le palier hydrostatique 4 devient instable, la douille 10 fait alors office de palier hydrodynamique réduisant tout porte-à-faux et diminuant le niveau vibratoire de l'arbre, c'est-à-dire maintenant la vitesse critique de ce dernier à une valeur nettement supérieure à sa vitesse d'emballement. Tout contact entre la jante 3 de la roue et le palier hydrostatique 4 étant interdit, la détérioration de ce dernier est évitée.

Une telle douille est, de préférence, réalisée en appliquant un revêtement par exemple de carbone sur la surface interne de la paroi 9 du corps 8 de la pompe, la surface en regard de l'arbre recevant généralement un revêtement différent.

De façon favorable, dans la partie 11 de la douille 10, est ménagée une pluralité de chambres de manière à constituer un labyrinthe permettant de limiter le débit du fluide circulant entre la douille 10 et l'arbre 1.

Selon un exemple de réalisation, avec une pompe dont la vitesse critique de l'arbre est supérieure à 2 500 tours par minute et la longueur de l'arbre entre le moteur d'entraînement et la roue est égale à 3 mètres environ, la roue ayant un rayon de 80 cm environ, une douille d'une longueur de 30 cm environ s'est révélée suffisante pour apporter les avantages décrits, le jeu ménagé entre l'arbre 1 et la douille 10 étant égal à 0,4 mm environ, c'est-à-dire étant pratiquement trois fois supérieur à l'amplitude des vibrations engendrées en fonctionnement normal par la rotation de l'arbre 1 de la pompe.

En particulier, la douille 10 peut être disposée à un autre endroit et, notamment au-dessus de la barrière thermique. Toutefois, en la disposant contre la paroi 9 du dispositif de réfrigération 7, on assure son refroidissement constant et, en particulier, lorsqu'elle fait office de palier hydrodynamique.

**Revendications**

1. Dispositif de sécurité dans groupe motopompe centrifuge pour fluide sous pression, comprenant une roue à aubes (2) solidaire d'un arbre vertical (1) entraîné en rotation, et disposée dans un corps de pompe (8), la jante de ladite roue (2) prenant normalement appui sur un palier hydrostatique (4), caractérisé en ce que ledit dispositif est constitué par une douille (10) logée coaxialement audit arbre (1) dans un espace ménagé à cet effet entre ledit arbre (1) et la paroi interne (9) dudit corps (8), ladite douille (10) ayant un diamètre interne légèrement supérieur au diamètre dudit arbre (1) de manière à constituer avec ladite paroi (9) un palier hydrodynamique en cas de défaillance dudit palier hydrostatique (4).

2. Dispositif selon la revendication 1, caractérisé en ce qu'une multiplicité de chambres est ménagée sur une partie (11) de la surface interne de ladite douille (10), de manière à constituer un labyrinthe.

3. Dispositif selon la revendication 1, caractérisé en ce que ladite douille (10) est constituée par un revêtement en carbone disposé sur la paroi interne (9) dudit corps (8).

4. Dispositif selon la revendication 1, caractérisé en ce que la différence entre le diamètre interne de ladite douille (10) et le diamètre de l'arbre (1) est sensiblement égal à trois fois l'amplitude des vibrations de l'arbre au droit de ladite douille (10) engendrées par la rotation normale de l'arbre (1).

**Claims**

1. Safety device inside a centrifugal motor pump group for fluid under pressure comprising a vane wheel (2) integrally connected to a shaft (1) driven in rotation, and emplaced in a pump body (8), the rim of the said wheel (2) normally being supported by a hydrostatic bearing (4) characterized in that the said device comprises a bushing (10) placed coaxially to the said shaft (1) in a space provided for this purpose between the said shaft (1) and the inner wall (9) of the said body (8), the said bushing (10) having an inside diameter slightly greater than the diameter of the said shaft (1) so as to constitute with the said wall (9) a hydrodynamic bearing in case of failure of the said hydrostatic bearing (4).

2. Safety device according to claim 1, characterized in that a multiplicity of cavities is provided in a portion (11) of the inner surface of the said bushing (10) so as to constitute a labyrinth.

3. Safety device according to claim 1, characterized in that the said bushing (10) comprises a carbon lining placed on the inner wall (9) of the said body (8).

4. Safety device according to claim 1, characterized in that the difference between the inside diameter of the said bushing (10) and the diameter of the shaft (1) is substantially three times the amplitude of the vibrations of the shaft perpendicular to the said bushing (10) engendered by the normal rotation of the shaft (1).

**Ansprüche**

1. Sicherheitsvorrichtung in einer Zentrifugal-Motorpumpe für ein unter Druck stehendes Fluid, mit einem Schaufelrad (2), das mit einer rotierend angetriebenen senkrechten Welle (1) fest verbunden und in einem Pumpengehäuse (8) angeordnet ist, wobei die Felge dieses Schaufelrades (2) sich normalerweise auf einem hydrostatischen Lager (4) abstützt, dadurch gekennzeichnet, daß die genannte Vorrichtung gebildet ist aus einer Hülse (10), die koaxial zu der Welle (1) in einem Raum aufgenommen ist, der zu diesem Zweck zwischen der Welle (1) und der Innenwand (9) des Gehäuses (8) gebildet ist, wobei die genannte Hülse (10) einen Innendurchmesser aufweist, der etwas größer als der Durchmesser der Welle (1) ist, um mit der genannten Wand (9) ein hydrodynamisches Lager für den Fall des Versagens des hydrostatischen Lagers (4) zu bilden.

2. Vorrichtung nach Anspruch 1, dadurch gekennzeichnet, daß eine Vielzahl von Kammern an einem Teil (11) der Innenoberfläche der genannten Hülse (10) angebracht ist, um ein Labyrinth zu bilden.

3. Vorrichtung nach Anspruch 1, dadurch gekennzeichnet, daß die genannte Hülse (10) aus einer Kohlenstoffbeschichtung gebildet ist, die auf der Innenwand (9) des genannten Gehäuses (8) angeordnet ist.

4. Vorrichtung nach Anspruch 1, dadurch gekennzeichnet, daß der Unterschied zwischen dem Innendurchmesser der genannten Hülse (10) und dem Durchmesser der Welle (1) im wesentlichen gleich dem Dreifachen der Wellenvibrationen senkrecht zu der Hülse (10) ist, die durch die normale Rotation der Welle (1) erzeugt werden.